Europäisches Patentamt

European Patent Office

Office européen des brevets

(19)

(11) EP 0 766 886 B1

(12) FASCICULE DE BREVET EUROPEEN

(45) Date de publication et mention
de la délivrance du brevet:
**23.09.1998 Bulletin 1998/39**

(21) Numéro de dépôt: **95923417.0**

(22) Date de dépôt: **20.06.1995**

(51) Int Cl.6: **H02P 7/622**

(86) Numéro de dépôt international:
**PCT/FR95/00817**

(87) Numéro de publication internationale:
**WO 95/35594 (28.12.1995 Gazette 1995/55)**

(54) **PROCEDE DE COMMANDE D'UN GRADATEUR DE TENSION POUR L'ALIMENTATION D'UN MOTEUR A INDUCTION**

SPANNUNGSREGELVERFAHREN FUER DIE STROMVERSORGUNG EINES INDUKTIONSMOTORS

METHOD OF STEPWISE VOLTAGE CONTROL FOR SUPPLYING AN INDUCTION MOTOR

(84) Etats contractants désignés:
**BE CH DE ES FR GB IT LI**

(30) Priorité: **22.06.1994 FR 9407635**

(43) Date de publication de la demande:
**09.04.1997 Bulletin 1997/15**

(73) Titulaires:
• **KOHEN, Cécile**
**92160 Antony (FR)**
• **CAEN, Claude**
**92100 Boulogne-Billancourt (FR)**

(72) Inventeur: **CAEN, Claude**
**F-92100 Boulogne-Billancourt (FR)**

(74) Mandataire: **CABINET BONNET-THIRION**
**12, Avenue de la Grande-Armée**
**75017 Paris (FR)**

(56) Documents cités:
**EP-A- 0 518 244     EP-A- 0 572 729**
**GB-A- 2 189 952**

• **REVUE GENERALE DE L'ELECTRICITE, vol. 84, no. 11, Novembre 1975 PARIS FR, pages 807-808, F. BRICHANT 'Acceleration et deceleration controlees de moteurs asynchrones a cage par gradateur'**

## Description

La présente invention concerne un procédé de commande pour gradateur de tension à thyristors, destiné à l'alimentation à tension variable et fréquence fixe d'un moteur à induction, plus particulièrement dans le cas où la charge qu'il entraîne présente une loi couple-vitesse d'allure quadratique, remarquable en ce qu'il associe à une grande simplicité de l'équipement, des performances de progressivité en périodes d'arrêt et de démarrage qui n'étaient jusque-là atteintes qu'à l'aide d'équipements plus complexes, tels que les convertisseurs de fréquence.

Les démarreurs électroniques de moteurs à induction ont conquis une part importante du marché industriel au cours des dix dernières années, en remplacement de matériels électrotechniques plus anciens, tels que commutateurs étoile-triangle, autotransformateurs ou rhéostats liquides. Leur réussite est liée à l'évolution des semi-conducteurs de puissance (fiabilité, compétitivité économique accrues), d'une part, et à celle des circuits de commande numériques dotés d'une capacité de traitement croissante, d'autre part. Parmi les divers systèmes de variation de vitesse électroniques, le démarreur électronique représente le moyen le plus simple de régler la vitesse des moteurs à induction : dans un tel système, le circuit de puissance ou gradateur de tension triphasé est constitué typiquement d'un ensemble de trois interrupteurs à courant alternatif, en série chacun sur une phase entre le réseau d'alimentation et le moteur, chaque interrupteur étant formé, typiquement, de deux thyristors connectés tête-bêche. Le fait que ces interrupteurs commutent à une fréquence basse qui est celle du réseau et n'exigent pas de commande d'extinction qui s'effectue en commutation naturelle au passage par zéro du courant, simplifie également les circuits de commande. Toutefois, ces démarreurs ne permettent de régler que l'amplitude de la tension du moteur, à la fréquence fixe du réseau d'alimentation. En comparaison, les convertisseurs de fréquence ont une structure plus complexe, tant du point de vue du circuit de puissance, constitué typiquement d'un pont triphasé de transistors de puissance dotés du pouvoir de coupure nécessaire à la commutation du courant moteur à une fréquence de quelques kilohertz au moins, que du circuit de commande qui doit générer des ondes à tension et fréquence variables par modulation de largeur d'impulsions. En compensation, ils disposent d'une deuxième grandeur réglante, la fréquence, qui leur permet, par réglage indépendant du flux magnétique et du couple, d'optimiser en chaque point le fonctionnement du moteur, notamment vis-à-vis du glissement et des pertes. Il en résulte une répartition des applications entre convertisseurs de fréquence et démarreurs électroniques, à haut niveau de performances pour les premiers et à coût modéré pour les seconds.

Compte tenu de l'évolution des circuits de commande numériques vers des performances de plus en plus élevées, il est devenu maintenant possible d'étendre le domaine d'applications des démarreurs électroniques en empiétant sur celui des convertisseurs de fréquence. Le démarrage et l'arrêt des pompes posent par exemple un problème particulier dû à l'existence d'une résonance mécanique qui se manifeste lors d'une variation rapide de débit par une oscillation du fluide dans la canalisation, dénommée "coup de bélier". Ce phénomène est préjudiciable tant par l'abaissement de durée de vie des installations que par le bruit acoustique qui l'accompagne. Ce bruit est notamment rédhibitoire dans les installations de distribution d'eau des zones urbaines. Les moyens connus pour résoudre ce problème tendent à éliminer toute variation brusque du débit et donc de la vitesse, pendant l'arrêt ou le démarrage. Ils ont recours à deux techniques :

- modulation du débit par une électrovanne à action progressive ;
- variation de la vitesse de la pompe par régulateur de vitesse, généralement constitué d'un convertisseur de fréquence et d'un moteur à courant alternatif.

Ces deux procédés présentent le même inconvénient d'un coût élevé et ce de façon d'autant plus sensible que le niveau des puissances considérées est important puisqu'il se situe couramment entre 10 et 500 Kw. Or, les efforts réalisés jusqu'à ce jour pour éliminer le "coup de bélier" lors de l'arrêt d'une pompe, grâce à une décélération régulière commandée par un simple démarreur électronique, n'ont pas abouti. Il est connu en effet, que par réglage de tension à fréquence constante, la caractéristique tension-vitesse du moteur à induction présente une discontinuité : en dessous d'une certaine vitesse qui dépend d'ailleurs de la caractéristique couple-vitesse de la charge mais qui, dans le cas d'une pompe, peut atteindre les deux tiers de la vitesse nominale, le fonctionnement devient instable et en décélération, le moteur "décroche" et passe brusquement en vitesse basse, alors qu'inversement en accélération, le moteur s'emballe et passe, hors contrôle, d'une vitesse basse jusqu'à la vitesse de fonctionnement stable. Ce comportement est de nature à provoquer le "coup de bélier" et le démarreur électronique est apparu dans ces conditions, comme inadapté à résoudre ce problème.

L'objet de la présente invention est de proposer un procédé de commande de démarreur électronique qui lui assure un comportement stable sur toute la plage de vitesses comprises entre zéro et la vitesse nominale, et qui notamment, en présence d'une charge à caractéristique couple-vitesse d'allure quadratique, soit capable de performances de démarrage et de ralentissement comparables à celles d'un convertisseur de fréquence et élimine le phénomène de "coup de bélier" lors du ralentissement d'une pompe, dans des conditions économiques plus avantageuses.

Le procédé suivant l'invention est destiné à un circuit de puissance du type gradateur de tension, tel que celui constitué par un système triphasé de trois interrupteurs statiques, comportant chacun deux thyristors montés tête-bêche, placés entre le réseau d'alimentation et le moteur à induction alimenté, en série chacun avec une phase du réseau ou, éventuellement du moteur seulement, dans le cas d'un moteur connecté suivant le montage triangle, et utilise un système de commande des thyristors par réglage de phase, de façon connue en soi et tel par exemple, que le montage décrit par A.P. Van den Bossche et J.A. Melkebeeke dans "Induction machine SCR voltage reduction; optimized control and dynamic modelling", IEE Conference Publication Numéro 234, Londres 1984. On remarquera toutefois que la méthode de variation de la tension moteur qui y est décrite, par réglage de l'angle de non-conduction des interrupteurs, n'est à considérer qu'à titre d'exemple et peut être remplacée par toute autre, telle que celle, plus classique où la grandeur réglante est la phase d'allumage des interrupteurs, rapportée à celle de leur tension d'alimentation.

L'invention propose ainsi un procédé de pilotage du déroulement temporel de régimes de transition d'un moteur polyphasé à induction entraînant une charge dont le couple résistant varie avec la vitesse selon une loi connue, et alimenté à tension réglable à travers des interrupteurs statiques à périodes de conduction de durée variables, caractérisé en ce que, ayant mémorisé une succession temporelle d'amplitudes de force électromotrice rotorique correspondant à une loi prédéterminée de variation de couple lors des régimes de transition, on détermine les tensions appliquées au moteur et le courant traversant, on en déduit, au moins de façon approchée, l'amplitude de force électromotrice rotorique développée par le moteur, et on agit sur les intervalles de conduction des interrupteurs statiques en sorte d'ajuster l'amplitude de force électromotrice rotorique développée sur l'amplitude mémorisée correspondante dans le déroulement du régime de transition.

Selon un développement avantageux de l'invention, les tensions appliquées au moteur et le courant traversant sont échantillonnés de façon sensiblement synchrone, et les valeurs échantillonnées transformées en signaux numériques, l'amplitude de force électromotrice rotorique étant déduite par calcul numérique des signaux numériques précités, la force électromotrice rotorique étant traitée en tant que vecteur, par composition de valeurs instantanées de chacune des trois phases.

Cette façon de procéder permet de tirer profit des performances avantageuses des circuits de commande numériques disponibles sur le marché.

Selon un autre aspect de l'invention, la valeur de consigne de la force électromotrice rotorique ou de son expression approchée, est déterminée suivant une loi temporelle adaptée à réaliser l'accélération ou la décélération requise. Cette loi est établie à partir de la caractéristique couple-vitesse de la charge entraînée et éventuellement de son inertie, par application de la formule suivante :

$$e = (c/g)^{\frac{1}{2}}$$

où

e est la force électromotrice rotorique,
g est le glissement,
c est le couple moteur,
e, g et c étant exprimés en valeurs réduites rapportées respectivement aux force électromotrice rotorique, glissement et couple nominaux du moteur.

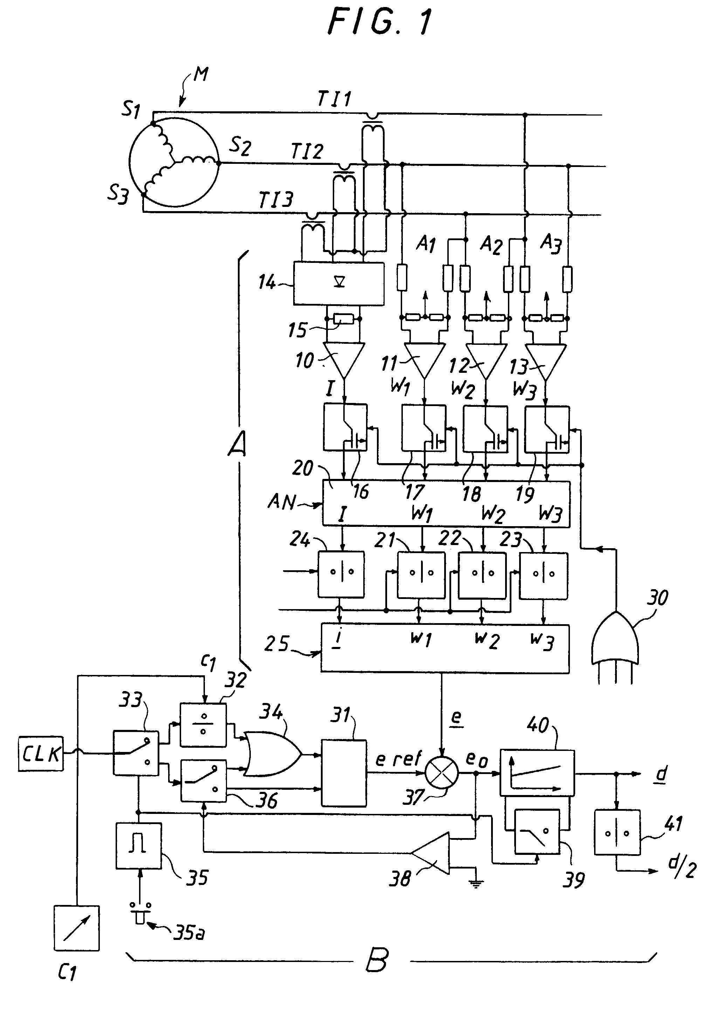

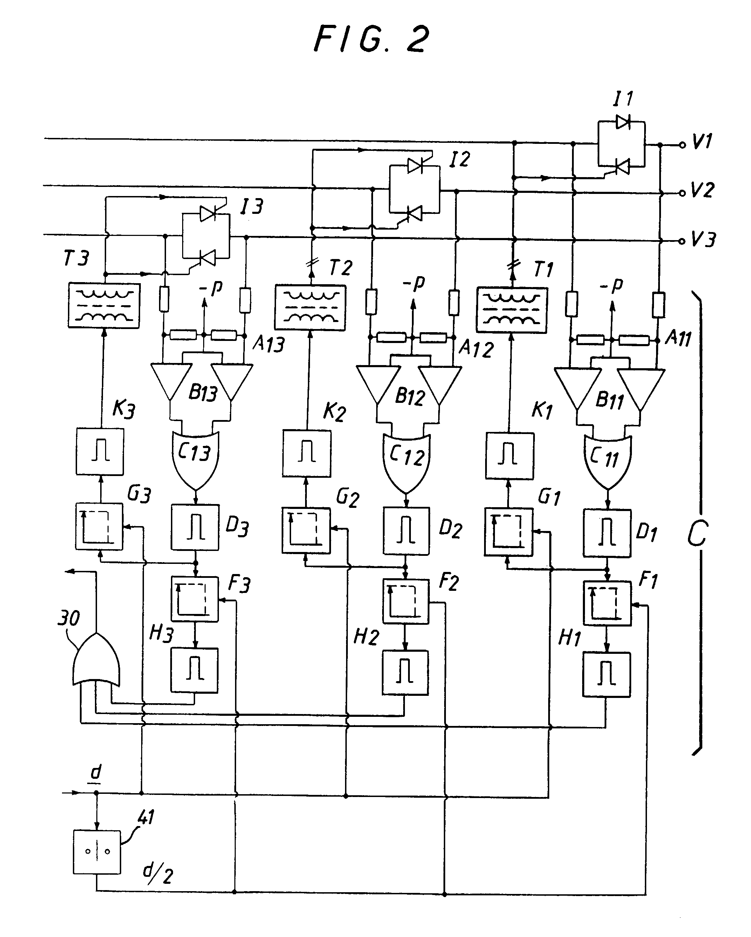

Les caractéristiques et avantages de l'invention ressortiront d'ailleurs de la description qui va suivre à titre d'exemple en référence aux dessins annexés où les figures 1 et 2 montrent deux parties complémentaires d'un schéma illustrant l'application de l'invention à la commande d'un moteur à induction triphasé.

Suivant la forme de réalisation choisie et représentée, on a un moteur à induction triphasé à rotor en court-circuit M dont les trois enroulements statoriques, branchés ici en étoile, sont alimentés à travers les bornes S1, S2 et S3. Celles-ci sont reliées aux conducteurs d'un réseau triphasé V1, V2, V3, à travers des interrupteurs I1, I2, I3 respectivement, constitués chacun d'une paire de thyristors montés tête-bêche. Les gâchettes des thyristors sont attaquées par la sortie de transformateurs d'impulsion respectivement T1, T2 et T3. Des transformateurs de courant TI1, TI2 et TI3 sont en série sur les trois phases.

Sur la figure 1 apparaissent un ensemble A d'éléments de détermination de la force électromotrice rotorique du moteur et un ensemble B d'élaboration de la consigne de force électromotrice rotorique.

Sur la figure 2 apparaît un ensemble C de commande des interrupteurs I1, I2, I3.

On va considérer ci-après successivement ces trois ensembles en notant que ceux-ci comportent des éléments de traitement numérique bien que leur représentation emprunte dans un souci de clarté certains symboles de la logique câblée.

A) Mesure de la force électromotrice

Trois amplificateurs différentiels 11, 12, 13, associés chacun à un réseau atténuateur A1, A2, A3 respectivement de rapport d'atténuation égal à cent environ, constitués chacun de quatre résistances, délivrent trois tensions W1, W2, W3, images des trois tensions entre phases du moteur M1. De même, l'amplificateur 10 délivre une tension I, image de la valeur redressée du courant triphasé de M, fournie par les courants secondaires de TI1, TI2 et TI3 circulant à travers le pont redresseur triphasé 14 et une résistance de charge 15. Les quatre signaux I, W1, W2, et W3, sont échantillonnés par quatre échantillonneurs bloqueurs 16, 17, 18 et 19 respectivement et transmis à un convertisseur analogique-numérique 20. L'instant d'échantillonnage, proche du milieu d'un intervalle de non-conduction, est défini pour chacun des trois interrupteurs I1, I2 ou I3, par la fonction logique OU 30 sur laquelle on reviendra encore ci-dessous. Après division par la valeur nominale de la tension entre phases Wn en 21, 22 et 23, les trois tensions W1, W2, W3 sont ramenées aux trois valeurs réduites wl, w2, w3. I est ramené à la valeur réduite i, après division en 24 par la valeur nominale In du courant de M. Le calcul de e, valeur réduite de la force électromotrice rotorique, est effectuée en 25, à partir de w1, w2, w3 et i, suivant l'expression, avec j=1,2 ou 3 :

$$e = \{ 1/3 [ 1/3 (w_{j+1} - w_{j-1})^2 + (w_j - 0,002 i)^2 ] \}^{\frac{1}{2}}$$

### B) Elaboration de la consigne de force électromotrice e ref

On va considérer d'abord le cas d'une décélération pour obtenir l'arrêt en un temps T$\underline{a}$. La valeur de e ref, programmée dans une mémoire 31 à l'adresse n, s'écrit :

$$e\ ref(n) = 0,2 ( 1 - n/m ) ) ( n/m )^{-\frac{1}{2}}$$

avec : $0 < n \leq m$

et : $e \leq 1$ m étant le nombre total de registres utilisés dans la mémoire 31 pour définir la loi d'évolution dans le temps de e ref, au cours d'une période d'arrêt. Le temps d'arrêt T$\underline{a}$ est réglé à l'aide d'un commutateur binaire C1 dont la valeur affichée c1, sert à réinitialiser un compteur 32 à chacun de ses passages à zéro. Ce compteur réalise ainsi une division par cl de la fréquence f, d'une horloge interne CLK à laquelle il est connecté par un inverseur 33. A chaque période de la fréquence obtenue, l'adresse de la mémoire 31, est incrémentée d'une unité à travers la fonction logique OU 34. Le temps théorique d'arrêt T$\underline{a}$ est égal à :

$$T\underline{a} = m (c1/f)$$

En début de période d'arrêt, l'initialisation de n est effectuée pendant une phase de quelques dizaines de millisecondes, définie par une fonction monostable 35, activée elle-même par un bouton poussoir 35a. Durant cette phase, l'inverseur 33 aiguille la fréquence f vers un commutateur 36 qui incrémente à travers la fonction OU 34, ou décrémente l'adresse n de la mémoire, suivant que le signe de l'erreur

$$e_0 = e\ ref(n) - e$$

soit positif ou négatif en sortie d'un sommateur 37 qui commande le commutateur 36 à l'aide d'un comparateur 38. Le signal d'erreur $e_0$ est appliqué d'autre part à un régulateur 40 à action proportionnelle-intégrale shunté par un interrupteur 39 qui inhibe son action pendant la phase définie par le monostable 35. A partir de la valeur initiale n0 obtenue, n est incrémentée, au cours de la période d'arrêt proprement dite, d'une unité à la périodicité de c1/f, jusqu'à la valeur maximale m.

La formule (2) ci-dessus énoncée pour une période de ralentissement se justifie comme suit dans le cas considéré ici d'une charge quadratique.

Partant de la relation $e = (c/g)^{\frac{1}{2}}$ avec e, c et g en valeurs réduites comme déjà indiqué plus haut, on considère la vitesse du moteur, soit w également rapportée à la valeur nominale de cette vitesse. Cette valeur réduite de vitesse est donc comprise entre 0 et 1 comme les autres valeurs réduites e, c et g déjà considérées.

Le caractère quadratique de la charge considérée (pompe) implique :

$$c = w^2$$

d'où

$$e = w/g^{\frac{1}{2}}$$

On considère maintenant le glissement nominal du moteur, soit $\underline{a}$, dont la valeur est couramment voisine de 0,04.

La relation entre w et g s'écrit :

$$w (1 - a) = 1 - ag$$

ou :

$$g = \frac{1}{a} [1 - w (1 - a)]$$

d'où

$$e = a^{\frac{1}{2}} w [1 - w (1 - a)]^{-\frac{1}{2}}$$

En prenant a = 0,04 et en négligeant $\underline{a}$ devant 1, on a

$$e = 0,2\ w (1 - w)^{-\frac{1}{2}}$$

Pour un <u>démarrage</u> à accélération constante, on peut écrire w = t, le temps t étant exprimé à son tour en valeur réduite rapportée au temps de démarrage. On a alors

$$e = 0,2 \, t \, (1 - t)^{-\frac{1}{2}}$$

Pour un <u>arrêt</u> à décélération constante, on peut écrire :

$$w = 1 - t$$

t étant rapporté au temps d'arrêt d'où

$$e = 0,2 \, (1 - t) \, t^{-\frac{1}{2}}$$

ce qui justifie la formule (2) avec :

$$\frac{n}{m} = t$$

## C) <u>Commande des thyristors (figure 2)</u>

Le régulateur à action proportionnelle-intégrale 40 qui reçoit en entrée l'erreur $e_0$ délivre un signal de commande <u>d</u> qui définit notamment l'angle de non-conduction des interrupteurs lj, à chaque demi-période du réseau. L'extinction de lj est observée à l'aide d'un des trois circuits composés d'un réseau atténuateur A11, A12, A13, d'un double comparateur B11, B12, B13 et d'un circuit OU C11, C12, C13. Durant la conduction, les deux sorties du double comparateur sont à l'état bas, par effet de la polarisation -P à son entrée qui introduit un seuil correspondant à quelques dizaines de volts aux bornes des interrupteurs. L'extinction se traduit par l'apparition d'une tension aux bornes de l'interrupteur qui, dès qu'elle franchit le seuil imposé par la polarisation -P, provoque suivant son signe, le passage à l'état haut de l'une ou l'autre sortie du double comparateur et celui du circuit OU. Le monostable D1, D2 ou D3 génère une impulsion brève à l'instant de l'extinction qui initialise deux groupes de monostables programmables, F1, F2, F3 et G1, G2, G3. Le retard du premier groupe est égal à la valeur définie par l'angle d/2, fourni par le régulateur 40 et un diviseur 41. Au terme de ce retard, le monostable F1, F2 ou F3 passe à l'état haut, le monostable H1, H2 ou H3 génère une impulsion brève qui, à travers la fonction OU en 30, déclenche le fonctionnement des échantillonneurs-bloqueurs 16 à 19. Le retard du deuxième groupe est égal à la valeur définie par l'angle <u>d</u> fourni par le régulateur 40. Les signaux retardés, délivrés sous forme d'impulsions brèves par les monostables K1, K2 ou K3 au passage à l'état haut de G1, G2 ou G3, sont appliqués au primaire de T1, T2 ou T3 et provoquent la conduction des interrupteurs correspondants. Chaque interrupteur étant ainsi commandé à chaque demi-période du réseau, le gradateur de puissance délivre au moteur la tension recherchée.

Bien entendu, l'invention n'est pas limitée à l'exemple décrit, mais en embrasse toutes les variantes d'exécution, dans le cadre des revendications.

## Revendications

1. Procédé de pilotage du déroulement temporel de régimes de transition d'un moteur polyphasé à induction (M) entraînant une charge dont le couple résistant varie avec la vitesse selon une loi approximativement connue, et alimenté à tension réglable à travers des interrupteurs statiques (I1, I2, I3) à périodes de conduction de durée variables, caractérisé en ce que, ayant mémorisé une succession temporelle d'amplitudes de force électromotrice rotorique correspondant à une loi prédéterminée de variation de couple lors des régimes de transition, on détermine les tensions (W1, W2, W3) appliquées au moteur (M) et le courant (I) traversant, on en déduit, au moins de façon approchée, l'amplitude de force électromotrice rotorique développée par le moteur (M), et on agit sur les intervalles de conduction des interrupteurs statiques en sorte d'ajuster l'amplitude de force électromotrice rotorique (e) développée à l'amplitude mémorisée (e ref) lui correspondant dans le déroulement du régime de transition.

2. Procédé suivant la revendication 1, caractérisé en ce que les tensions appliquées au moteur (M) et le courant traversant sont échantillonnés (16, 17, 18, 19) de façon sensiblement synchrone, et les valeurs échantillonnées transformées en signaux numériques (20), l'amplitude de force électromotrice rotorique (e) étant déduite par calcul numérique des signaux numériques précités, la force électromotrice étant traitée en tant que vecteur par composition de valeurs instantanées de chacune des trois phases

3. Procédé suivant la revendication 2, caractérisé en ce que les échantillonnages sont synchronisés sensiblement sur le milieu d'un intervalle séparant deux périodes de conduction d'un interrupteur statique (I1, I2, I3).

4. Procédé suivant la revendication 3, caractérisé en ce que les échantillonnages sont synchronisés à chaque intervalle séparant deux périodes de conduction.

5. Procédé suivant la revendication 1, caractérisé en ce que la succession temporelle des amplitudes de force électromotrice rotorique est déterminée par application de la formule suivante :

$$e = (c/g)^{\frac{1}{2}}$$

où

e est la force électromotrice rotorique,
g est le glissement,
c est le couple moteur,
e, g et c étant exprimés en valeurs réduites rapportées respectivement aux force électromotrice rotorique, glissement et couple nominaux du moteur.

6. Procédé suivant la revendication 5, pour un moteur entraînant une charge dont le couple résistant est fonction sensiblement quadratique de la vitesse, caractérisé en ce que la succession temporelle des amplitudes de force électromotrice est déterminée par application de la formule suivante :

$$e = w\,(g)^{-\frac{1}{2}}$$

où w est la vitesse du moteur, exprimée en valeur réduite rapportée à la vitesse nominale du moteur.

7. Procédé suivant la revendication 6, où l'accélération est sensiblement constante durant le régime de transition, caractérisé en ce que la succession temporelle des amplitudes de force électromotrice rotorique est déterminée par application de la formule suivante :

$$e = a^{\frac{1}{2}}\,(1 - t)^{\alpha}\,t^{\beta}$$

avec

$$0 < t < 1 \text{ et } e \leq 1$$

où

t représente le temps, exprimé en valeur réduite rapportée à la durée du régime de transition,
a représente le glissement nominal,
$\alpha$ et $\beta$ sont des exposants valant respectivement - 1/2 et 1 si le régime est un démarrage, et respectivement 1 et - 1/2 si le régime est un arrêt.

**Patentansprüche**

1. Steuer- bzw. Regelverfahren des zeitlichen Ablaufes der Übergangs- bzw. Einschwingbereiche eines Mehrphasen-Induktionsmotors (M), der eine Last antreibt, deren Gegen- bzw. Lastmoment mit der Geschwindigkeit gemäß einem ungefähr bekannten Gesetz variiert, und mit einer regelbaren Spannung über statische Unterbrecher (I1, I2, I3) mit Leitungsperioden mit variabler Dauer gespeist wird, dadurch gekennzeichnet, daß nach Speichern einer zeitlichen Aufeinanderfolge von Amplituden der elektromotorischen Drehkraft entsprechend einem vorbestimmten Gesetz der Änderung des Drehmoments während der übergangs- bzw. Einschwingbereiche, die an den Motor (M) angelegten Spannungen (W1, W2, W3) und der hindurchtretende Strom (I) bestimmt werden, daß daraus die Amplitude der durch den Motor (M) entwickelten, elektromotorischen Drehkraft wenigstens näherungsweise abgeleitet wird und daß auf die Leitungsintervalle der statischen Unterbrecher derart eingewirkt wird, daß die Amplitude der entwickelten elektromotorischen Drehkraft (e) auf die ihr im übergangs- bzw. Einschwingbereich entsprechende, gespeicherte Amplitude (e ref) eingestellt wird.

2. Verfahren nach Anspruch 1, dadurch gekennzeichnet, daß die an den Motor (M) angelegten Spannungen und der durchfließende Strom in im wesentlichen synchroner Weise abgetastet (16, 17, 18, 19) werden, und wobei nach Umwandlung der abgetasteten Werte in numerische Signale (20) die Amplitude der elektromotorischen Drehkraft (e) durch numerische Berechnung der vorgenannten, numerischen Signale abgeleitet wird, wobei die elektromotorische Kraft als Vektor durch Zusammenstellung der Momentanwerte von jeder der drei Phasen behandelt wird.

3. Verfahren nach Anspruch 2, dadurch gekennzeichnet, daß die Abtastungen im wesentlichen auf das Mittel eines Intervalls, welches zwei Leitungsperioden eines statischen Unterbrechers (I1, I2, I3) trennt, synchronisiert werden.

4. Verfahren nach Anspruch 3, dadurch gekennzeichnet, daß die Abtastungen auf jedes zwei Leitungsperioden trennende Intervall synchronisiert werden.

5. Verfahren nach Anspruch 1, dadurch gekennzeichnet, daß die zeitliche Aufeinanderfolge der Amplituden der elektromotorischen Drehkraft durch Anwendung der folgenden Formel bestimmt wird:

$$e = (c/g)^{\frac{1}{2}}$$

worin

e die elektromotorische Drehkraft ist,
g der Schlupf ist,
c das Motordrehmoment ist,
wobei e, g und c als reduzierte Werte ausgedrückt sind, die sich auf den Nennwert der elektromotorischen Drehkraft, des Schlupfs bzw.

des Drehmoments des Motors beziehen.

**6.** Verfahren nach Anspruch 5 für einen eine Last antreibenden Motor, dessen Gegen- bzw. Lastmoment eine im wesentlichen quadratische Funktion der Geschwindigkeit ist, dadurch gekennzeichnet, daß die zeitliche Aufeinanderfolge der Amplituden der elektromotorischen Kraft durch Anwendung der folgenden Formel bestimmt wird:

$$e = w\,(g)^{-\frac{1}{2}}$$

worin
w die Geschwindigkeit des Motors ist, die als reduzierter Wert ausgedrückt ist, der sich auf die Nenngeschwindigkeit des Motors bezieht.

**7.** Verfahren nach Anspruch 6, worin die Beschleunigung während des übergangs- bzw. Einschwingbereichs im wesentlichen konstant ist, dadurch gekennzeichnet, daß die zeitliche Aufeinanderfolge der Amplituden der elektromotorischen Drehkraft durch Anwendung der folgenden Formel bestimmt wird:

$$e = a^{\frac{1}{2}}\,(1 - t)^{\alpha}\,t^{\beta}$$

mit

$$0 < t < 1 \text{ und } e \leq 1$$

worin

t die Zeit, ausgedrückt als reduzierter Wert in bezug auf die Dauer des übergangs- bzw. Einschwingbereichs, darstellt,
a den Schlupf-Nennwert darstellt,
α und β Exponenten sind, die den Wert von -1/2 bzw. 1 annehmen, wenn der Bereich ein Starten ist, und 1 bzw. -1/2 sind, wenn der Bereich ein Anhalten ist.

**Claims**

**1.** A process for control of the progress in respect of time of transitional operating states of a polyphase induction motor (M) driving a load whose resisting torque varies with speed in accordance with an approximately known law, and fed at a regulable voltage by way of static switches (I1, I2, I3) involving conduction periods of variable durations, characterised in that, having stored a succession in respect of time of amplitudes of rotor electromotive force corresponding to a predetermined law in respect of variation in torque in transitional operating states, the voltages (W1, W2, W3) applied to the motor (M) and the traversing current (I) are determined, the amplitude of the rotor electromotive force developed by the motor (M) is at least approximately deduced therefrom, and the conduction intervals of the static switches are acted upon so as to adjust the amplitude of the rotor electromotive force (e) developed to the stored amplitude (e ref) corresponding thereto in the progress of the transitional operating state.

**2.** A process according to claim 1 characterised in that the voltages applied to the motor (M) and the traversing current are substantially synchronously sampled and the sampled values transformed into digital signals (20), the amplitude of the rotor electromotive force (e) being deduced by digital calculation from said digital signals, the electromotive force being processed as a vector by the composition of instantaneous values of each of the three phases.

**3.** A process according to claim 2 characterised in that the sampling operations are synchronised substantially at the middle of an interval separating two conduction periods of a static switch (I1, I2, I3).

**4.** A process according to claim 3 characterised in that the sampling operations are synchronised at each interval separating two conduction periods.

**5.** A process according to claim 1 characterised in that the succession in respect of time of the amplitudes of the rotor electromotive force is determined by application of the following formula:

$$e = (c/g)^{\frac{1}{2}}$$

in which:

e is the rotor electromotive force,
g is the slip, and
c is the motor torque,
e, g and c being expressed as reduced values related respectively to the nominal rotor electromotive force, slip and torque of the motor.

**6.** A process according to claim 5 for a motor driving a load whose resisting torque is a substantially square function of speed characterised in that the succession in respect of time of the amplitudes of electromotive force is determined by application of the following formula:

$$e = w \, (g)^{-\frac{1}{2}}$$

in which:

w is the speed of the motor expressed as a reduced value related to the nominal speed of the motor.

7. A process according to claim 6 wherein the acceleration is substantially constant during the transitional operating state characterised in that the succession in respect of time of the amplitudes of the rotor electromotive force is determined by application of the following formula:

$$e = a^{\frac{1}{2}} \, (1 - t)^{\alpha} \, t^{\beta}$$

with

$$0 < t < 1 \text{ and } e \leq 1$$

in which:

t represents time expressed as a reduced value related to the duration of the transitional operating state,
a represents nominal slip, and
$\alpha$ and $\beta$ are exponents which are respectively worth -1/2 and 1 if the operating state is a starting state and 1 and - 1/2 respectively if the operating state is a stopped state.

EP 0 766 886 B1

# FIG. 1

# F I G. 2